# EUROPEAN PATENT APPLICATION

(11) **EP 3 392 331 A1**
(43) Date of publication of application: **24.10.2018**
(21) Application number: 16874959.6
(22) Date of filing: 15.12.2016
(51) Int. Cl.: C12G 1/02

(54) **METHOD FOR PREPARING GRAPES FOR SUBSEQUENT FERMENTATION AND DEVICE FOR CARRYING OUT SAME**

(30) Priority: 18.12.2015 ES 201531852
(71) Applicant: Moriones Goñi, Francisco Javier, 31180 Zizur Mayor (Navarra) (ES); Uriz Lopez, María Laura, 31621 Sarriguren (Navarra) (ES)
(72) Inventor: Moriones Goñi, Francisco Javier, 31180 Zizur Mayor (Navarra) (ES); Uriz Lopez, María Laura, 31621 Sarriguren (Navarra) (ES)
(86) International application number: PCT/ES2016/070898
(87) International publication number: WO 2017/103315

(57) **Abstract**

The method according to the invention is based on tearing or cutting the husks of the grape seeds, without breaking the seed; a process that is carried out during the transfer of the grapes coming from the de-stemmer towards the fermentation barrel. For this purpose, a device is provided that is formed in a section of tubing (2), in the centre of which one or more crowns (1) with radial arms (6) are formed, having a toothed contour, determining tearing knives for the skin of the husks of the grapes.

## Description

### OBJECT OF THE INVENTION

This invention refers to a procedure for preparing grapes for their subsequent fermentation, carrying out the procedure that affects the grape berry between the de-stemming process and the fermentation process.

Another object of the invention is to provide a device to carry out the previous procedure, a device having the means to tear or rip the skin of the grape, so as to increase the contact surface for a better and faster extraction of colour and other anti-oxidant components present in the grape matrix during the fermentation process.

With the invention process, a greater hydro-alcoholic solubility is achieved, also resulting in an increase in the extraction of polyphenol and anthocyanin, which is beneficial for the colour index of the stock obtained, as well as its content of anti-oxidant substances, definitively improving the fermentation process and the final result.

### BACKGROUND OF THE INVENTION

In the wine sector, it is well known that when subjecting grape bunches to the usual de-stemming process using the corresponding de-stemming machine and separating the grape berries from the peduncles of the bunches, these grape berries are transferred, through a conduit or tube, to the corresponding fermentation vat.

Hence, the ES10709974 utility model describes a skin extractor in combination with means of removing the skin, and whose means are made up of chains with blades fitted on a moveable arm.

In parallel, in the utility model ES1053323, a device is described for tearing the skins in fermentation tanks, without declaring the means used to make the tear on the skins.

In the Spanish invention patent ES0200596, a mechanism for threshing grape marc and for separating the seed from the same is described, breaking up the skins by strikes made with teeth, in order to recover the pips or seeds.

In said documents, although their purposes are similar to those in the present application, the tearing of the skins takes place in the interior of the fermentation vat itself, implying much more voluminous and complex means than those proposed in the present application, in which the tearing or ripping of the grape berry is carried out before the grape enters the fermentation vat.

### DESCRIPTION OF THE INVENTION

Therefore, the procedure of the invention is based on the use of a de-stemming machine, following the grape bunch de-stemming process, in order to separate the grape berries from the pedicels or peduncles of the branches, the skin of the referred grape berries is ripped in order to make cuts in the skin, but without actually breaking the seeds, before entering the fermentation vat.

The process is carried out by mechanical action, using blades interspersed in the conduit or tube through which the already de-stemmed grape berries are steered to the fermentation vat, the momentum of the grape berries being done by means of a pump.

More specifically, the mechanism, according to the invention, consists of the interspersal of a section of tubing in series with the berry conveyance tubing, from the de-stemmer to the fermentation vat, with one or various crowns being assembled in this tubing, having internal radial arms with toothed edges, constituting the respective blades, crowns having a toothed internal edge, so that when the grape berry skins pass through said section of tubing, and impact with these crowns, the skins are torn by these teeth.

Preferably, the number of crowns will be two or more, and will have an offset angle with regard to the arms or blades, so that at any point along route, before or after, the grape berries are ultimately intercepted by at least one blade.

In other words, the crowns, attached in a specific position, are placed with their radial arms holding the blades, are duly alternated (offset), in order to sweep the greatest possible surface area of the flow.

The crowns, with their arms or blades, are pressure secured being screwed in, so that each crown is flanged between two joints that ensure the correct grip as well as an airtight close.

For their part, the arms of the blades of the crown can have a triangular section with one of the vertexes directed against the flow of the grape berries, so as to offer less resistance to said flow, having arranged the centre of the crown, at least the one at the entrance of the device, so that it is complemented with a conical piece with its vertex also facing the flow, thus contributing to the hydrodynamic nature of the crown.

Beneficially, it is convenient that this section of tubing with crowns is located close to the de-stemmer, to take better advantage of the force of the impeller pump.

As for the radial arms of the crown or crowns, constituting the blades, they may vary in number, depending on the size of the berries and the variety of grape, it being better to increase the number of radial arms, the smaller the berry size.

Finally, it should be mentioned that the described device includes a valve to release the pressure that is produced inside the device due to the forced current of the grape berries which slow down when encountering the first crown, a valve that may be arranged to open automatically when the pressure reaches a certain level or security limit, and that may materialize in an electro-valve related to a pressure gauge to control the pressure.

Such a pressure-release valve may reconnect with the de-stemmer, preferably via a flexible ringed tube, so that the pulp, liquid or berries that are ejected by the valve return to the start of the route.

### DESCRIPTION OF THE DRAWINGS

To complement the description given below and to contribute towards a better understanding of the characteristics of the invention, in accordance with a preferential example of the practical use of the same, a set of drawings is provided as an integral part of this description, intended to be illustrative but not limitative:
Figure 1.- Shows a representation corresponding to a perspective view of the arrangement inside the conduit of a pair of crowns with decisive radial arms of blades that make up the device that is the object of this invention.
Figures 2 and 3.- Show schematic and cross-sectional views, corresponding to the cut-off lines A-A and B-B, of the previous drawing.

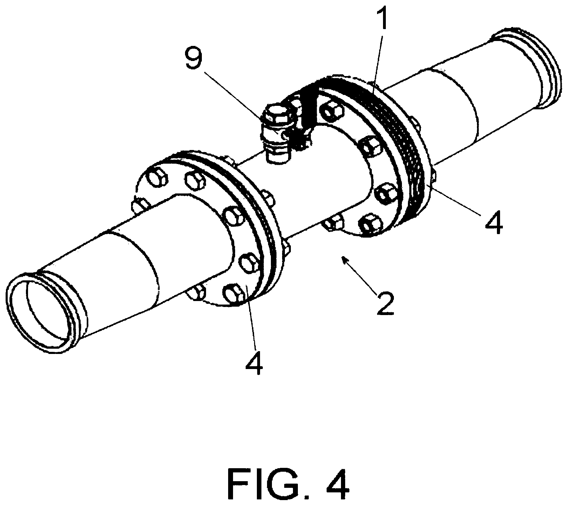

Figure 4.- Shows, finally, a perspective view of the invention, arranged to be assembled in series with the conveyance that connects the de-stemmer with the fermentation vat.

### PREFERENTIAL EMBODIMENT OF THE INVENTION

As seen in the figures presented, and to carry out the procedures of tearing or ripping the skin of the grape berries, following the de-stemming of the bunches, the invention includes a device made up of a section of tubing (2), in the centre of which there are one, two or more crowns (1), attached via the corresponding flanges (4), devices that are interspersed in series with the corresponding tubing to convey the grape berries from the de-stemmer to the fermentation vat.

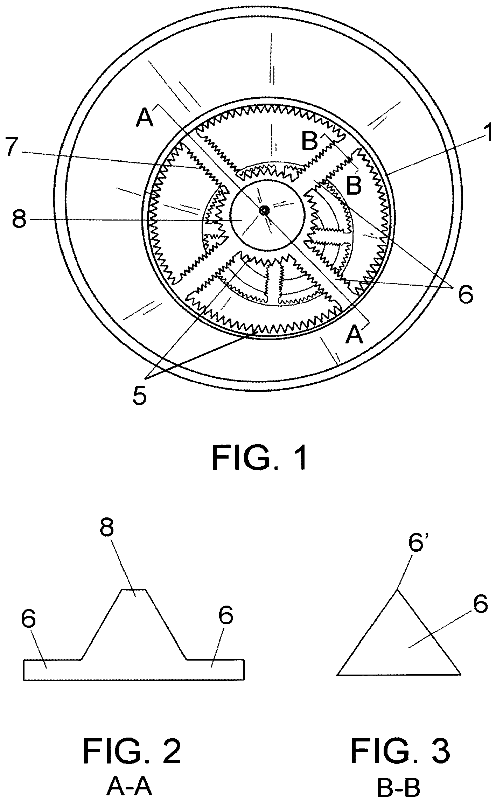

The crowns (1) conveniently attached via screws and also concentrically toothed (5) directed inwards, include multiple radial arms (6), with toothed edges (7), also forming cutting blades so that the grape berries that pass through said section of tubing (2), in the centre of which the crowns (1) are arranged with their toothed (5-7) and radial arms (6) constituting the blades, will be torn on their skin, this tearing taking place in a very effective manner since, preferentially, the number of crowns (1) is two or more, so the radial arms (6) constituting the blades are offset one with the other, those of one crown with respect to those of the following, as represented in figure 1, to ensure that with the passage of the grape berries, they will impact with the teeth (5-7) on the crowns and arms.

The crowns (1), and preferably the one situated in the area closest to the entrance of the device or section of tubing (2), have a conical element (8) conveniently attached in their central zone with its vertex facing the flow the grape berries.

In figures 2 and 3, both views are shown in sections corresponding precisely to the profile presented by the conical element (8) with the arms or blades (6), as well as the transversal section corresponding to each of these arms (6), in this case, triangular, with the vertex (6') similarly directed towards the front of the entrance of the flow of the grape berries.

In this way, the ripping or tearing of the skin of the grape berries is done without breaking the grape seeds.

Finally, a valve (9) has been included in the device so as to release the pressure produced inside, so that if said pressure is excessive (measured by a pressure gauge), this valve will open to re-circulate the entry flow towards the de-stemmer.

## Claims

1. Procedure for the preparation of the grape for its subsequent fermentation, **characterized by** a mechanical action of tearing the skin of the grape berries, in the process of transferring the grape berries from the de-stemmer to the fermentation vat.

2. Device for the preparation of the grape for its subsequent fermentation, **characterized by** a section of tubing (2) that connects in series in the conveyance that communicates the de-stemmer with the fermentation vat, in the centre of which there are elements to tear the skin of the grape berries.

3. Device, according to claim 2, **characterized by** a tubing section (2) in which one or more crowns (1) are established with radial arms (6), elements that have a toothed contour (5-7), constituting the blades for tearing the skin of the grape berries.

4. Device, according to claim 3, **characterized by** at least the crown situated closest to the entrance of the device, having a central conical frontal piece (8) whose vertex opposes the incoming flow.

5. Device, according to claim 3, **characterized by** the radial arms (6) constituting the blades, having a transversal section of a triangular configuration.

6. Device, according to claim 3, **characterized by** the section of tubing (2) incorporating a valve (9) for the release of pressure in the centre of the device, susceptible to incorporating means of automatic opening and of connecting through the corresponding conveyance with the de-stemmer.

7. Device, according to claim 3, **characterized by** the tubing section (2) which includes flanges (4) for the fastening of the crowns (1) to the tubing section (2).
